# EUROPEAN PATENT APPLICATION

(11) **EP 3 012 174 A1**
(43) Date of publication of application: **27.04.2016**
(21) Application number: 15190860.5
(22) Date of filing: 21.10.2015
(51) Int. Cl.: B62D 7/14, B62D 5/04, B62D 7/15

(54) **REAR WHEEL STEERING DEVICE OF VEHICLE**

(30) Priority: 24.10.2014 JP 2014217749
(71) Applicant: AISIN SEIKI KABUSHIKI KAISHA, Kariya-shi, Aichi-ken, 448-8650 (JP)
(72) Inventor: MORINAGA, Shinya, Kariya-shi, Aichi-ken, 448-8650 (JP)
(74) Representative: Winter, Brandl, Fürniss, Hübner, Röss, Kaiser, Polte - Partnerschaft mbB

(57) **Abstract**

A rear wheel steering device of a vehicle for steering a rear wheel of the vehicle includes a reduction mechanism (30) being connected to an output shaft (21) of an electric motor (20), the reduction mechanism (30) reducing a rotation of an output of the electric motor (20), and a linear motion mechanism (50) converting a rotary motion of a nut member (51) into a linear motion of a rod (52, 52x). The reduction mechanism (30) includes a drive pulley (31, 31 x, 31 y) being connected to the output shaft (21) of the electric motor (20), a driven pulley (32) being connected to the nut member (51) and being rotatably supported at the housing (10) about an axis of the rod (52, 52x), and a belt (33, 33x, 33y) being stretchingly provided at the drive pulley (31, 31x, 31y) and at the driven pulley (32). The reduction mechanism (30) reduces the output of the electric motor (20) via the drive pulley (31, 31x, 31y), the belt (33, 33x, 33y) and the driven pulley (32) to transmit the output of the electric motor (20) to the linear motion mechanism (50).

## Description

### TECHNICAL FIELD

This disclosure generally relates to a rear wheel steering device of a vehicle.

### BACKGROUND DISCUSSION

Various types of devices are known as a rear wheel steering device that configures a part of a four-wheel steering system (4WS) of a vehicle. Generally, according to a rear wheel steering actuator disclosed in JPH7-215226A (hereinafter referred to as Patent reference 1), a rear wheel steering device is provided with an electric motor, a reduction mechanism being connected to an output of the electric motor, and a transmission mechanism converting a rotary motion of an output of the reduction mechanism into a linear motion and transmitting the linear motion to an axle. An actuator shaft of the rear wheel steering actuator disclosed in Patent reference 1 is inserted into a cylindrical rotor member and is coaxially positioned with the rotor member. Accordingly, the rear wheel steering actuator is downsized. A planetary gear mechanism is used as the reduction mechanism of the output of the electric motor.

As disclosed in JP2008-164014A (hereinafter referred to as Patent reference 2), a telescopic actuator includes a first housing containing a motor of the telescopic actuator and a second housing containing a reduction device and a feed screw mechanism. The first housing and second housing are removable from each other in order to enhance the versatility for various use of the telescopic actuator at low cost. Accordingly, in a case where a user desires to change the specification of the motor, or in a case where the user desires to change the operating characteristics of the reduction device and of the feed screw mechanism, the user only has to change a subassembly of the first housing, or to change a subassembly of the second housing, without changing the whole design of the telescopic actuator. Accordingly, the versatility for various models of the telescopic actuator is enhanced, resulting in the cost reduction. According to the telescopic actuator disclosed in Patent reference 2, a planetary gear mechanism is used as a reduction mechanism of an output of the motor.

As described above, according to the rear wheel steering actuator disclosed in Patent reference 1 and the telescopic actuator disclosed in Patent reference 2, the planetary gear mechanisms are used as the reduction mechanism for the output of the motor. However, the planetary gear is naturally limited with a combination of the numbers of teeth that establish the engagement of the gears. According to the coaxial configuration of the rear wheel steering actuator disclosed in Patent reference 1, the number of teeth of the planetary gear is controlled by a diameter of an output rod (the actuator shaft disclosed in Patent reference 1) and an outer diameter of the actuator. Accordingly, a reduction ratio cannot be easily changed. On the other hand, in a case where the user changes the output characteristics of the telescopic actuator disclosed in Patent reference 2, the user is required to change the subassembly including the housing even if the scope of the change is smaller than changing the output characteristics of the rear wheel steering actuator disclosed in Patent reference 1. Further, according to the telescopic actuator disclosed in Patent reference 2, the output rod cannot be extended from opposing ends of the housing, which is described in Patent reference 1.

A need thus exists for a rear wheel steering device of a vehicle that can set various output characteristics by changing a minimum number of components.

### SUMMARY

According to an aspect of this disclosure, a rear wheel steering device of a vehicle for steering a rear wheel of the vehicle includes a first connection member, a second connection member, a housing being configured to be supported at the rear wheels by the first connection member and the second connection member, an electric motor being supported at the housing, a reduction mechanism being connected to an output shaft of the electric motor, the reduction mechanism reducing a rotation of an output of the electric motor, and a linear motion mechanism including a nut member being connected to the reduction mechanism, the linear motion mechanism including a rod being threaded to the nut member, the rod being connected to at least one of the first connection member and the second connection member, the linear motion mechanism converting a rotary motion of the nut member into a linear motion of the rod. The reduction mechanism includes a drive pulley being connected to the output shaft of the electric motor, a driven pulley being connected to the nut member and being rotatably supported at the housing about an axis of the rod, and a belt being stretchingly provided at the drive pulley and at the driven pulley. The reduction mechanism reduces the output of the electric motor via the drive pulley, the belt and the driven pulley to transmit the output of the electric motor to the linear motion mechanism.

According to the aforementioned construction, the rear wheel steering device of this disclosure includes the housing, the electric motor, the reduction mechanism, and the linear motion mechanism. The housing is configured to be supported at the rear wheels by the first connection member, the ball joint and the second connection member, the ball joint. The electric motor is supported at the housing. The reduction mechanism is connected to the output shaft and decreases the output of the output shaft. The linear motion mechanism includes the nut member and the rod. The nut member is connected to the reduction mechanism. The rod is threaded to the nut member and is connected to at least one of the first and second connection members (the ball joints). The linear motion mechanism converts the rotary motion of the nut member into the linear motion of the rod. The reduction mechanism includes the drive pulley, the driven pulley and the belt. The drive pulley is connected to the output shaft of the electric motor. The driven pulley is connected to the nut member and is rotatably supported at the housing about the axis of the rod. The belt is stretchingly provided at the driven pulley and at the drive pulley. Because the reduction mechanism reduces the output of the electric motor via the drive pulley, the belt and the driven pulley to transmit the output of the electric motor to the linear motion mechanism, comparing to various output characteristics varied by the type of a suspension, a weight of the vehicle and a size of tires, the output characteristics can be satisfied by a few changes of the components. Accordingly, because the components and the production line come to be in common, or to be unchanged, the manufacturing cost can be reduced. Specifically, because the output characteristics can be changed by changing only two components that are the drive pulley and the belt, the rear wheel steering device including the various output characteristics can be easily and inexpensively provided.

According to another aspect of this disclosure, the rear wheel steering device of the vehicle further includes a planetary gear mechanism including a sun gear being connected to and integrally rotating with the driven pulley, a ring gear being unrotatably supported within the housing, a planetary gear being meshed with the ring gear and with the sun gear, and a carrier being connected to the planetary gear and being supported by the nut member.

According to the aforementioned construction, the rear wheel steering device further includes the planetary gear mechanism that includes the sun gear, the ring gear, the planetary gear and the carrier. The sun gear is connected to and integrally rotates with the driven pulley. The ring gear is unrotatably supported within the housing. The planetary gear is meshed with the ring gear and with the sun gear. The carrier is connected to the planetary gear and is supported at the nut member. Accordingly, various output characteristics may be easily set. That is, the planetary gear mechanism is not connected to the output shaft of the electric motor, however, is connected to the reduction mechanism that includes the drive pulley, the driven pulley and the belt to further decrease the rotation of the output of the electric motor. A reduction ratio can be set greater than a reduction ratio of a device that only includes a reduction mechanism. Accordingly, the reduction ratio can be further easily set in accordance with the various output characteristics.

According to still another aspect of this disclosure, the first connection member is fixed at the housing and the second connection member is connected to the rod.

According to the aforementioned construction, the first connection member, the ball joint is fixed at the housing. The second connection member, the ball joint is connected to the rod. Accordingly, the unilateral expansion device can be configured.

According to still further aspect of this disclosure, the first connection member and the second connection member are connected to respective opposing ends of the rod.

According to the aforementioned construction, the opposing ends of the rod are connected to the first connection member, the ball joint and the second connection member, the ball joint, respectively. Accordingly, the bilateral expansion device can be configured. In a case where the unilateral expansion device and the bilateral expansion device are configured, the main components that are, for example, the electric motor, the reduction mechanism and the linear motion mechanism, are in common, or are unchanged. Accordingly, the manufacturing cost can be reduced and the rear wheel steering device with various output characteristics can be inexpensively provided.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a lateral cross sectional view illustrating a rear wheel steering device according to a first embodiment disclosed here;
Fig. 2 is a longitudinal cross sectional view illustrating a structure of the rear wheel steering device having a high-thrust specification according to the first embodiment;
Fig. 3 is a longitudinal cross sectional view illustrating a structure of the rear wheel steering device having a high-speed specification according to the first embodiment;
Fig. 4 is a graph illustrating output characteristics of an actuator according to the first embodiment; and
Fig. 5 is a lateral cross sectional view illustrating a rear wheel steering device according to a second embodiment..

### DETAILED DESCRIPTION

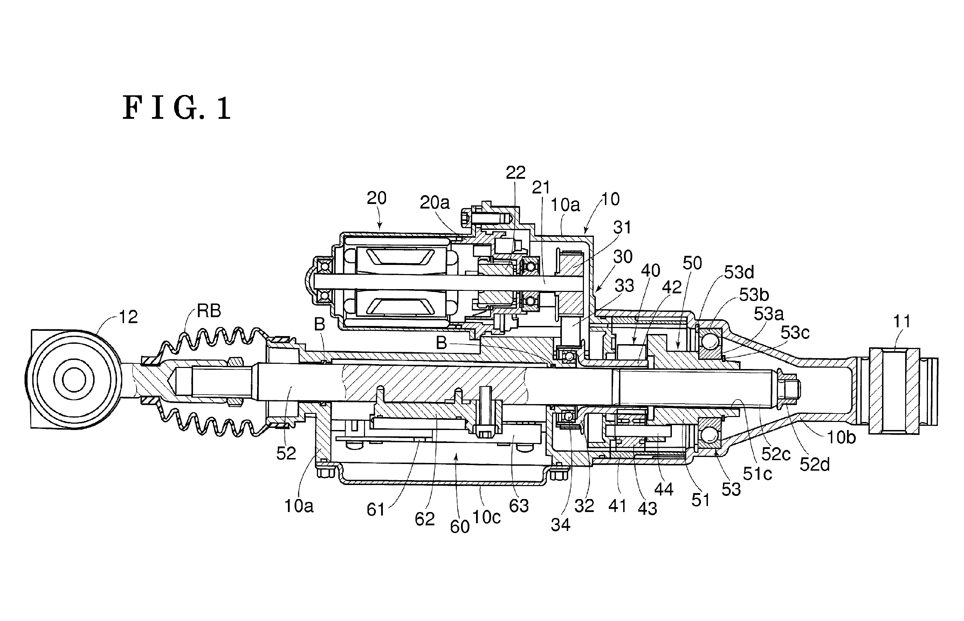

First and second embodiments of this disclosure will hereunder be explained with reference to the drawings. As shown in Fig. 1, according to a rear wheel steering device of the first embodiment, an actuator is contained in a housing 10 that is supported at rear wheels by a first connection member 11 and a second connection member 12. The actuator is configured with an electric motor 20, a belt reduction mechanism 30 (i.e., serving as a reduction mechanism), a planetary gear mechanism 40 and a linear motion mechanism 50. The housing 10 of the first embodiment is provided with a body portion 10a of a case, a cylindrical support portion 10b and a lid portion 10c. The support portion 10b is integrally formed with the first connection member 11. The lid portion 10c closes an opening portion formed at the body portion 10a. A rubber boot RB is mounted to a portion between the body portion 10a and the second connection member 12.

The body portion 10a supports the electric motor 20 and contains the belt reduction mechanism 30. A support portion 10b contains the planetary gear mechanism 40 and the linear motion mechanism 50. A rod 52 configuring the linear motion mechanism 50 is supported at the body portion 10a. A first end portion of the rod 52 extends from the body portion 10a and is connected to the second connection member 12. Thus, a unilateral expansion actuator is formed. A distance between the first and second connection members 11, 12 increases and decreases by the expansion and contraction of the rod 52 to steer the rear wheels.

According to the first embodiment, as shown in Fig. 1, a trapezoidal screw is formed with a male screw portion 52c. The male screw portion 52c is provided at an outer peripheral surface of a second end portion of the rod 52 and extends over a predetermined length in an axial direction of the rod 52. A female screw portion 51 c is provided at an inner circumferential surface of the nut member 51. The feed screw mechanism is configured with the male screw portion 52c and the female screw portion 51c that are positioned so as to be threaded with each other. Alternatively, instead of the trapezoidal screw, for example, a ball screw is applicable. Thus, the linear motion mechanism 50 is configured with the nut member 51 and the rod 52. The rotary motion of the nut member 51 is converted into the linear motion of the rod 52.

According to the electric motor 20 of the first embodiment, an output shaft 21 is rotatably supported at a mounting portion 20a that is attached to the body portion 10a of the housing 10. A distal end portion of the output shaft 21 being extendingly positioned within the body portion 10a is connected to a drive pulley 31 of the belt reduction mechanism 30. The electric motor 20 of the first embodiment includes a brush 22. Alternatively, a brushless motor is applicable.

The belt reduction mechanism 30 of the first embodiment includes the drive pulley 31, a driven pulley 32 and a belt 33. The drive pulley 31 is connected to the output shaft 21 of the electric motor 20. The driven pulley 32 is connected to the nut member 51 and is rotatably supported at the housing 10 about an axis of the rod 52. The belt 33 is stretchingly provided at the driven pulley 32 and at the drive pulley 31. The belt reduction mechanism 30 is configured to reduce the rotation of the output of the electric motor 20 to transmit the output of the electric motor 20 to the linear motion mechanism 50. As shown in Fig. 1, the driven pulley 32 is formed in a hollow shape and is coaxially positioned with the rod 52. The driven pulley 32 is rotatably supported at the body portion 10a of the housing 10 via a bearing 34. The driven pulley 32 and the drive pulley 31 are formed with respective outer teeth. The belt 33 is formed with inner teeth. The respective outer teeth of the driven pulley 32 and the driving pulley 31 and the inner teeth of the belt 33 are positioned so as to be meshed with one another.

According to the first embodiment, the planetary gear mechanism 40 is provided between the belt reduction mechanism 30 and the linear motion mechanism 50. The output of the belt reduction mechanism 30 is further decreased to be transmitted to the linear motion mechanism 50. The planetary gear mechanism 40 includes a ring gear 41, a sun gear 42, a planetary gear 43, and a carrier 44. The ring gear 41 is unrotatably supported within the housing 10. The sun gear 42 is connected to and integrally rotates with the driven pulley 32. The planetary gear 43 is meshed with the ring gear 41 and with the sun gear 42. The carrier 44 is connected to the planetary gear 43 and is supported by the nut member 51. Alternatively, instead of the planetary gear mechanism 40, or in addition to the planetary gear mechanism 40, a planetary gear mechanism may be positioned between the electric motor 20 and the belt reduction mechanism 30.

The nut member 51 configuring the linear motion mechanism 50 is rotatably supported at the support portion 10b of the housing 10 via a bearing 53. The bearing 53 corresponds to a ball bearing. An inner ring 53a of the bearing 53 is engaged with an outer circumferential surface of the nut member 51. The inner ring 53a is held by a C-shaped snap ring 53c. An outer ring 53b of the bearing 53 is engaged with an inner circumferential surface of the support portion 10b. The outer ring 53b is held by a C-shaped snap ring 53d.

The rod 52 is movably (and unrotatably) supported at the body portion 10a of the housing 10 via a pair of bushes B. A load that can be applied to the rod 52 in an axial direction is configured to be absorbed by the housing 10 via the nut member 51, the bearing 53 and the snap rings 53c, 53d. A nut 52d for preventing the rod 52 from falling is threaded onto a distal end of the male screw portion 52c of the rod 52. A magnet member 62 is screwed and fixed onto an intermediate portion of the rod 52.

The magnet member 62 is abut on a displacement sensor 61 and is contained within the body portion 10a of the housing 10. An electric control device 60 is configured with the displacement sensor 61 that is supported on an electric circuit board 63. The magnet member 62 detects the displacement of the rod 52 in the axial direction when the rod 52 is in the linear motion. The magnet member 62 prevents the rod 52 from rotating by coming in contact with an inner surface of the body portion 10a.

Thus, according to the rear wheel steering device of the first embodiment, in a case where the electric motor 20 is rotary driven by the electric control device 60, the rotary output of the electric motor 20 is decreased by the belt reduction mechanism 30 and by the planetary gear mechanism 40 to rotary drive the nut member 51. The linear motion mechanism 50 converts the rotary motion of the nut member 51 into the linear motion of the rod 52. Accordingly, the distance between the first and second connection members 11, 12 increases and decreases to control the steering angle of the rear wheels.

According to the belt reduction mechanism 30, the drive pulley 31 and the belt 33 may be selectively changed. By changing the drive pulley 31 and the belt 33, the rear wheel steering device that has different kinds of output characteristics can be provided. That is, the reduction ratio of the belt reduction mechanism 30 is defined by the ratio of the respective numbers of the teeth of the drive pulley 31 and the driven pulley 32. Thus, the reduction ratio can be changed by changing the respective numbers of the teeth of the drive pulley 31 and the belt 33 while maintaining a pitch between the output shaft 21 of the electric motor 20 and the shaft of the rod 52 to be fixed, or to be unchanged.

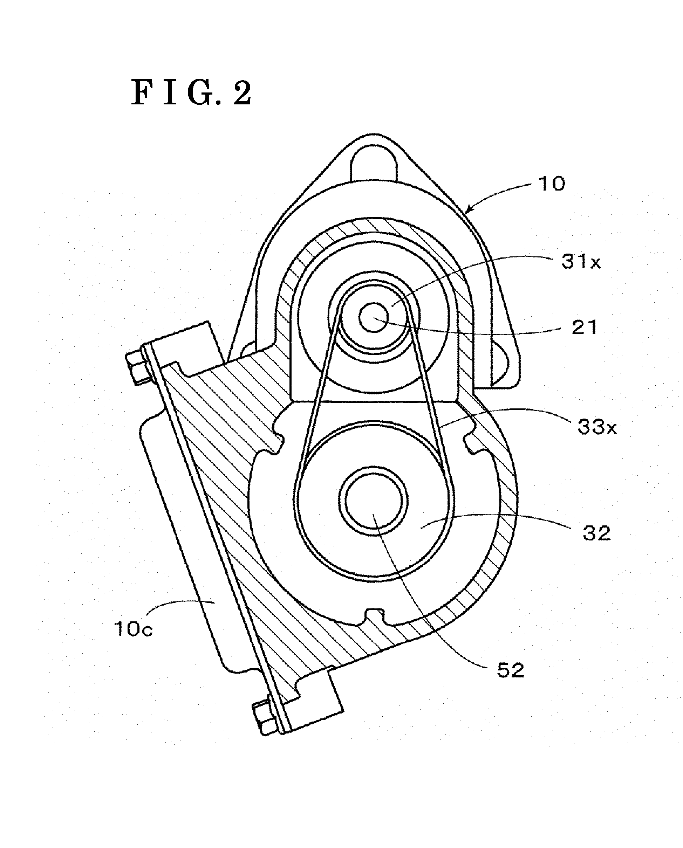

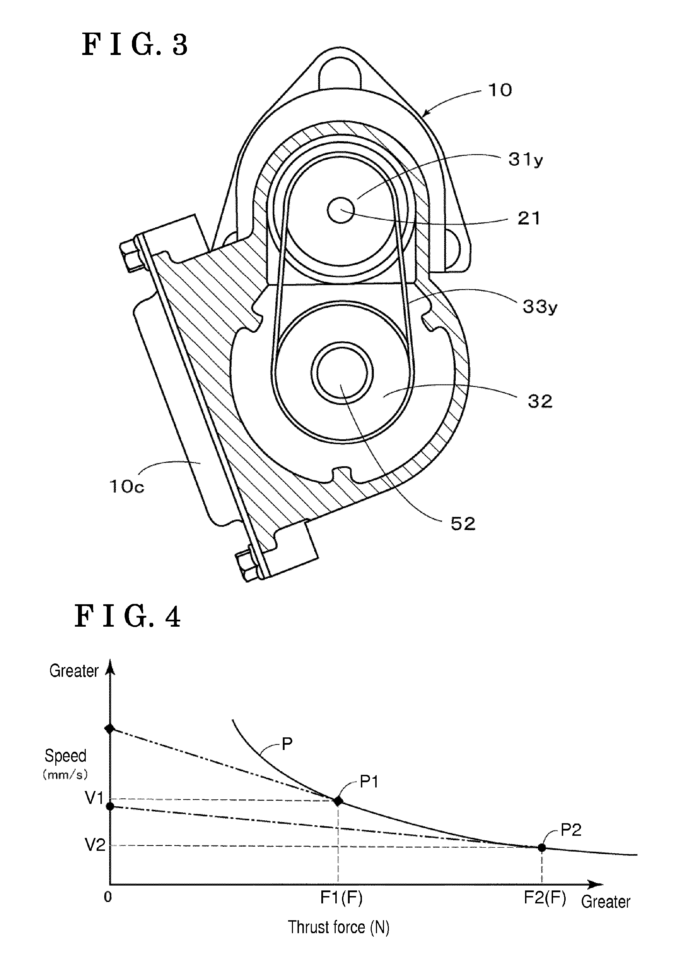

For example, as shown in Fig. 2, a drive pulley 31x that has a diameter smaller than a diameter of the drive pulley 31 in Fig. 1 is used relative to the driven pulley 32. In a case where a belt 33x that is applicable to the drive pulley 31x and the driven pulley 32 is used, a rear wheel steering device can include the high thrust specification. On the other hand, as shown in Fig. 3, a drive pulley 31 y that has a diameter larger than a diameter of the drive pulley 31 in Fig. 1 is used. In a case where a belt 33y that is applicable to the drive pulley 31 y and the driven pulley 32 is used, the rear wheel steering device can include the high speed specification. Other components of the rear wheel steering device shown in Figs. 2 and 3 are in common, or are unchanged. A pitch between the respective shafts of the drive pulleys 31x, 31y and the shaft of the driven pulley 32 are unchanged. As above, the various output characteristics (a thrust force and the speed of the rod 52) of the actuator can be set from the high speed characteristics to the high thrust characteristics within a predetermined range of a maximum output P by changing only two members that are the drive pulley 31 and the belt 33.

Fig. 4 is a graph showing the output characteristics of the actuator that is configured with the electric motor 20, the belt reduction mechanism 30, the planetary gear mechanism 40 and the linear motion mechanism 50. A lateral axis shows the thrust force of the rod 52. A longitudinal axis shows the speed of the rod 52. The maximum output P of the actuator is calculated by the multiplication of the maximum thrust force (F) and the speed (V) at the time of the maximum thrust force. According to the types of the rear wheel steering device shown in Figs. 2 and 3, because the electric motor 20, the planetary gear mechanism 40 and the linear motion mechanism 50 are in common, or are unchanged, the maximum output of the actuator comes to be substantially at a predetermined amount irrespective of the reduction ratio of the belt reduction mechanism 30 (specifically, the effectiveness of the belt transmission efficiency is slightly different due to the different reduction ratio and the effectiveness of the feed screw is slightly different due to the difference of the input torque or the rotary speed). The output characteristics can be changed within the predetermined range of the maximum output P.

For example, as shown in Fig. 4, the predetermined maximum output P is shown in a solid line. An output P1 (=F1 x V1) of the rear wheel steering device having the high-speed specification is shown in a two-dot chain line. An output P2 (=F2 x V2) of the rear wheel steering device having the high-thrust force specification is shown in a dashed line. The output P1 is equal to the output P2. Thus, the output characteristics of the actuator are not limited to the output P1 and the output P2 and can be desirably set by the setting of the reduction ratio of the belt reduction mechanism 30 to the extent that an output Px is equal to the maximum output P (constant).

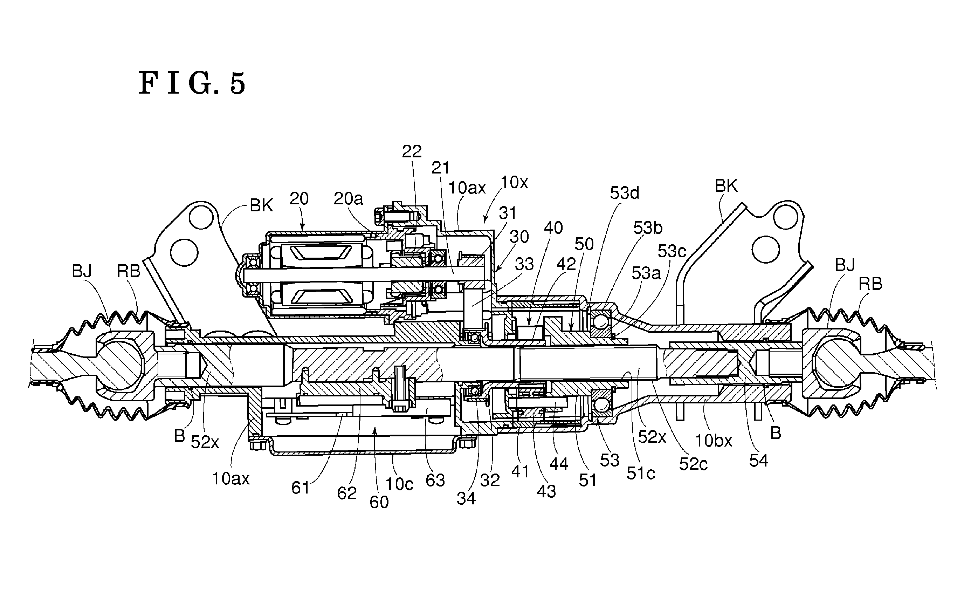

According to the first embodiment, the first connection member 11 is integrally formed with the support portion 10b of the housing 10. The second connection member 12 is connected to the rod 52. In a case where the opposing ends of the rod 52 are connected to a first connection member (that corresponds to a ball joint BJ) and a second connection member (that corresponds to the ball joint BJ), respectively, a bilateral (right and left) expansion actuator can be configured. That is, as described above, because the driven pulley 32 is formed in the hollow shape, because the rod 52 is coaxially positioned within the driven pulley 32, and because the electric motor 20, the belt reduction mechanism 30, the planetary gear mechanism 40 and the linear motion mechanism 50 are in common, or are unchanged (however, the rod 52 has to be changed to some extent), the bilateral expansion actuator can be configured by a minimum change of the components as shown in Fig. 5 (a second embodiment).

According to the second embodiment, as shown in Fig. 5, a rod 52x, unlike the rod 52 in Fig. 1, extends from right-left opposing ends of a housing 10x. Opposing end portions (a first end portion and a second end portion) of the rod 52x are connected to the respective ball joints BJ. A body portion 10ax and a support portion 10bx of the housing 10x are fixed to a vehicle body via respective brackets BK. The first end portion of the rod 52x is movably supported at the body portion 10ax in the axial direction. A connection member 54 that connects the second end portion of the rod 52x to the ball joint BJ is movably supported at the support portion 10bx in the axial direction. Because other components are the same as the components shown in Fig. 1, the same components as those described in the first embodiment are marked with the same reference numerals shown in Fig. 1, and description of the components will not be repeated.

As above, the housing 10x and the bracket BK that configure the support structure to the vehicle body are different from the first embodiment shown in Fig. 1. However, because the electric motor 20, the belt reduction mechanism 30, the planetary gear mechanism 40 and the linear mechanism 50 (except for the rod 52x) are in common, or are unchanged, the unilateral expansion actuator and the bilateral expansion actuator can be configured by the minimum change of the components.

## Claims

1. A rear wheel steering device of a vehicle for steering a rear wheel of the vehicle, comprising:
a first connection member (11, BJ);
a second connection member (12, BJ);
a housing (10, 10x) being configured to be supported at the rear wheels by the first connection member (11, BJ) and the second connection member (12, BJ);
an electric motor (20) being supported at the housing (10, 10x);
a reduction mechanism (30) being connected to an output shaft (21) of the electric motor (20), the reduction mechanism (30) reducing a rotation of an output of the electric motor (20); and
a linear motion mechanism (50) including a nut member (51) being connected to the reduction mechanism (30), the linear motion mechanism (50) including a rod (52, 52x) being threaded to the nut member (51), the rod (52, 52x) being connected to at least one of the first connection member (11, BJ) and the second connection member (12, BJ), the linear motion mechanism (50) converting a rotary motion of the nut member (51) into a linear motion of the rod (52, 52x); wherein
the reduction mechanism (30) includes
a drive pulley (31, 31x, 31y) being connected to the output shaft (21) of the electric motor (20);
a driven pulley (32) being connected to the nut member (51) and being rotatably supported at the housing (10) about an axis of the rod (52, 52x); and
a belt (33, 33x, 33y) being stretchingly provided at the drive pulley (31, 31x, 31y) and at the driven pulley (32); and
the reduction mechanism (30) reduces the output of the electric motor (20) via the drive pulley (31, 31x, 31y), the belt (33, 33x, 33y) and the driven pulley (32) to transmit the output of the electric motor (20) to the linear motion mechanism (50).

2. The rear wheel steering device of the vehicle according to claim 1, further comprising:
a planetary gear mechanism (40) including;
a sun gear (42) being connected to and integrally rotating with the driven pulley (32);
a ring gear (41) being unrotatably supported within the housing (10);
a planetary gear (43) being meshed with the ring gear (41) and with the sun gear (42); and
a carrier (44) being connected to the planetary gear (43) and being supported by the nut member (51).

3. The rear wheel steering device of the vehicle according to either claim 1 or 2, wherein the first connection member (11) is fixed at the housing (10) and the second connection member (12) is connected to the rod (52).

4. The rear wheel steering device of the vehicle according to either claim 1 or 2, wherein the first connection member (BJ) and the second connection member (BJ) are connected to respective opposing ends of the rod (52x).
